# EUROPÄISCHE PATENTSCHRIFT

(11) **EP 3 275 031 B1**
(45) Veröffentlichungstag und Bekanntmachung des Hinweises auf die Patenterteilung: **31.07.2019**
(21) Anmeldenummer: 15820491.7
(22) Anmeldetag: 18.12.2015
(51) Int. Cl.: H01M 2/20, H01M 2/30, H01M 2/32, H01M 10/0525, H01R 4/06, H01R 4/62, H01R 11/28

(54) **ZELLVERBINDER SOWIE SYSTEM MIT EINEM ZELLVERBINDER**
CELL CONNECTOR AND SYSTEM COMPRISING A CELL CONNECTOR
CONNECTEUR DE CELLULES AINSI QUE SYSTÈME AVEC UN CONNECTEUR DE CELLULES

(30) Priorität: 23.03.2015 DE 102015104296
(43) Veröffentlichungstag der Anmeldung: 31.01.2018
(73) Patentinhaber: Auto-Kabel Management GmbH, 79688 Hausen i.W. (DE)
(72) Erfinder: DÖREN, Jens, 52428 Jülich (DE)
(74) Vertreter: Cohausz & Florack
(86) Internationale Anmeldenummer: PCT/EP2015/080493
(87) Internationale Veröffentlichungsnummer: WO 2016/150533

(56) Entgegenhaltungen:
- CN-U- 202 454 651
- DE-A1-102012 100 862
- DE-A1-102013 010 472
- DE-T5-112012 003 782
- US-A1- 2013 149 919

## Beschreibung

Der Gegenstand betrifft einen Zellverbinder zur elektrischen Verbindung eines aus einem ersten metallischen Werkstoff gebildeten Terminals einer ersten Batteriezelle mit einem aus einem zweiten metallischen Werkstoff gebildeten Terminal einer zweiten Batteriezelle. Darüber hinaus betrifft der Gegenstand ein System mit einem solchen Zellverbinder sowie Terminals von zwei Batteriezellen.

Die Verbindung von Terminals (Batteriepolen) von Batteriezellen ist in der Regel über Zellverbinder realisiert. Solche Zellverbinder sind leitende Verbindungsstücke, die elektrisch leitend mit den zu verbindenden Terminals der Batteriezellen verbunden werden. Diese Verbindung kann mittels Schrauben, Löten oder Schweißen erfolgen. Bei modernen Batteriezellen, insbesondere für den Einsatz in Hybrid- und Elektrofahrzeugen, werden häufig Lithium-Ionen Zellen eingesetzt. Bei diesen, jedoch auch bei anderen Batteriezellen basierend auf anderen Technologien, kann es dazu kommen, dass die verschiedenpoligen Terminals aus verschiedenartigen Metallen gebildet sind. Im Fall von Lithium-Ionen Zellen ist der Pluspol in der Regel aus einem Aluminiumwerkstoff gebildet und der Minuspol aus einem Kupferwerkstoff. Zum Verbinden von diesen Batteriezellen in Reihe ist es notwendig, den Pluspol einer ersten Zelle mit dem Minuspol elektrisch einer zweiten Zelle zu verbinden. Kommt dabei ein einstückiger Batteriezellenverbinder zum Einsatz, muss dieser mit zwei verschiedenen metallischen Werkstoffen verbunden werden. Dies ist insofern problematisch, als dass sortenunreine Verbindungen auftreten können. Insbesondere in Anwendungen, in denen die Batteriezellen veränderlichen Umweltbedingungen ausgesetzt sind, insbesondere durch Kondenswasser oder dergleichen können diese sortenunreinen Verbindungen stark zu Kontaktkorrosionen neigen.

Zur Vermeidung von stoffschlüssigen Verbindungen werden auch Schraubverbindungen vorgeschlagen. Diese sind jedoch hinsichtlich ihres thermischen Verhaltens, ihrer Vibrationsresistenz und dergleichen nachteilig. Insbesondere in dynamischen Umgebungen, wie diese stets in automobilen Anwendungen zu erwarten sind, sind Schraubverbindungen teilweise nachteilig. In der Druckschrift DE 11 2012 003782 T5 wird ein aus dem Stand der Technik bekannter Zellverbinder beschrieben.

Aus diesem Grunde lag dem Gegenstand die Aufgabe zugrunde, einen Zellverbinder zur Verfügung zu stellen, der einerseits anspruchsvollen Umgebungsbedingungen standhält und andererseits industriell günstig herstellbar ist.

Ein solcher Zellverbinder wird gegenständlich gemäß den Merkmalen des Anspruchs 1 zur Verfügung gestellt. Ein gegenständlicher Zellverbinder lässt sich darüber hinaus gegenständlich in einem System nach Anspruch 11 einsetzen.

Es hat sich gezeigt, dass die Verwendung von einem Trägermaterial aus einem metallischen Werkstoff vorteilhaft ist. Erfindungsgemäß ist das Trägermaterial monolithisch gebildet. Das bedeutet, dass ein massives Trägermaterial als Substrat für den Zellverbinder dient. An dem Trägermaterial lässt sich insbesondere unmittelbar ein Terminal einer Batteriezelle anordnen, wenn dieses aus dem gleichen metallischen Werkstoff wie das Trägermaterial gebildet ist.

Zum Anschluss eines weiteren Terminals, insbesondere aus einem anderen metallischen Werkstoff als den des zuvor genannten Terminals, wird gegenständlich in dem Trägermaterial ein Kontaktteil vorgesehen, welches in einem als Aufnahme gebildeten Anschlussbereich des Trägermaterials angeordnet ist.

Die Aufnahme ist gegenständlich gestuft, derart, dass die Aufnahme zwei verschiedene Durchmesser aufweist, die jeweils einer von zwei einander gegenüberliegenden Oberflächen des Trägermaterials zugewandt sind. Die stufige Aufnahme hat somit auf einer ersten Oberfläche des Trägermaterials einen ersten Durchmesser, der kleiner ist, als ein Durchmesser der Aufnahme, der einer zweiten, zur ersten Seite gegenüberliegenden Oberfläche des Trägermaterials zugewandt ist. In axialer Richtung der Aufnahme ist vorzugsweise ein Sprung der Durchmesser vorgesehen, so dass sich im Bereich des Sprungs des Durchmessers eine Stufe sowie eine vorzugsweise ringförmige Stufenfläche bildet.

Die Durchmesser sind vorzugsweise rund oder oval. Es versteht sich, dass als Durchmesser eine lichte Weite einer Öffnung verstanden werden kann. Insbesondere sind in der Aufnahme zwei koaxial zueinander verlaufende, in axialer Richtung nacheinander angeordnete Öffnungen vorgesehen. Die Aufnahme ist vorzugsweise als Durchgangsöffnung vorgesehen. Es ist jedoch auch möglich, dass die Aufnahme als Sackloch mit gestufter Innenfläche vorgesehen sein kann. Dann kann der größere Durchmesser im Bereich der Durchbrechung einer ersten Oberfläche des Trägermaterials vorgesehen sein und der zweite Durchmesser, der kleiner ist als der erste Durchmesser im Inneren des Trägermaterials vorgesehen sein, ohne das Trägermaterial auf der gegenüberliegenden Oberfläche zu durchstoßen.

Die Aufnahme verläuft vorzugsweise in einer axialen Richtung, die im Wesentlichen senkrecht auf der Oberfläche des Trägermaterials steht.

Zur Kontaktierung des Terminals der Batteriezelle wird ein Kontaktstück in der Aufnahme angeordnet. Das Kontaktstück ist so geformt, dass es zu der gestuften Aufnahme korrespondiert. Die Aufnahme hat eine Innenfläche, zu der die radiale äußere Mantelfläche des Kontaktstücks korrespondiert. Insbesondere ist zumindest ein Außendurchmesser des Kontaktstücks als Presspassung, Übergangspassung oder Spielpassung zu einem Innendurchmesser der Aufnahme geformt. Zwischen Mantelfläche und Innenfläche bildet sich insbesondere eine Berührfläche.

Durch die Aufnahme des Kontaktstücks in der Aufnahme des Trägermaterials, welches monolithisch ist, bildet sich nur wenig Angriffsfläche für Feuchtigkeit. Kontaktkorrosion wird somit weitestgehend vermieden. Lediglich im Bereich des Ringspaltes zwischen dem Kontaktstück und der Aufnahme kann Feuchtigkeit an die Kontaktstelle zwischen Kontaktstück und Aufnahme gelangen. Dies kann beispielsweise durch Beschichten, insbesondere im Bereich des Ringspaltes vermieden werden. Eine Beschichtung kann beispielsweise aus Nickel und/oder Zinn erfolgen.

Gemäß einem Ausführungsbeispiel wird vorgeschlagen, dass das Kontaktstück in der Aufnahme mittels einer Nietverbindung befestigt ist. Das Kontaktstück kann einen im verbundenen Zustand in Richtung der Aufnahme weisenden Nietschaft aufweisen. Der Nietschaft kann in den kleineren Durchmesser eingeschoben werden und anschließend mit dem Trägermaterial im Bereich der Aufnahme vernietet werden.

Erfindungsgemäß wird vorgeschlagen, dass das Kontaktstück mit zumindest einer Innenwand der Aufnahme stoffschlüssig verbunden ist. Vorzugsweise ist die stoffschlüssige Verbindung mittels Schweißen hergestellt. Insbesondere bei kreisrunden Aufnahmen und kreisrunden Kontaktstücken lässt sich das Kontaktstück beispielsweise mittels Rotationsreibschweißen in die Aufnahme schweißen. Dabei kann insbesondere eine Stufenfläche in der Aufnahme mit einem Fügebereich im Bereich einer radialen Auskragung des Kontaktstücks stoffschlüssig miteinander verbunden werden.

Das Kontaktstück kann entweder rohrförmig oder aus Vollmaterial gebildet sein. Insbesondere ist das Kontaktstück als gestufte Hülse geformt. Die gestufte Hülse hat eine Durchgangsöffnung, die einen einheitlichen Durchmesser aufweisen kann oder auch zwei verschiedene Durchmesser. Die Mantelfläche der Hülse kann in Längsrichtung gestuft sein, insbesondere korrespondierend zur Stufung der Aufnahme. Bei einer solchen Hülse kann ein Terminal einer Batteriezelle durch die Hülse durchgesteckt werden und in der Hülse beispielsweise mittels Schweißen verschweißt werden. Sind Kontaktstück und Terminal aus dem selben metallischen Werkstoff, beispielsweise Aluminium oder Legierungen davon, entsteht zwischen dem Kontaktstück und dem Terminal eine sortenreine Verbindung.

Auch ist es möglich, dass das Kontaktstück ein gestufter Bolzen ist. Ein solcher gestufter Bolzen hat keine Durchgangsöffnung. Der gestufte Bolzen hat jedoch vorzugsweise ebenfalls in Längsrichtung eine gestufte Mantelfläche, die korrespondiert zu der Innenfläche der Aufnahme ist. Auf den Bolzen kann an zumindest einer Stirnfläche, welche vorzugsweise planparallel mit zumindest einer Oberfläche des Trägermaterials abschließt, ein Terminal angeschweißt werden.

Das Kontaktstück ist metallisch, insbesondere aus einem selben metallischen Werkstoff wie ein Terminal einer Batteriezelle. Insbesondere ist ein Aluminiumwerkstoff, beispielsweise Aluminium oder Legierungen davon, ein geeigneter Werkstoff für das Kontaktstück.

Das Trägermaterial ist vorzugsweise aus einem metallischen Vollmaterial, beispielsweise Kupfer oder einer Legierung davon. Wie bereits erläutert, ist das Trägermaterial monolithisch und nicht beispielsweise schichtweise aufgebaut. Dies verhindert das Eindringen von Feuchtigkeit in beispielsweise eine laminierte Schicht des Trägermaterials. Hierdurch hat das Trägermaterial eine höhere Sicherheit gegenüber Materialverschweiß durch Korrosion. Das Trägermaterial kann aus einem metallischen Werkstoff, der dem metallischen Werkstoff eines Terminals einer Batteriezelle entspricht gebildet sein. Dann kann an dem Trägermaterial unmittelbar ein solches Terminal angeordnet und eine sortenreine Verbindung gebildet werden.

Erfindungsgemäß hat die Aufnahme einen ersten Durchmesser und einen zweiten, größeren Durchmesser als den ersten Durchmesser. Der größere Durchmesser kann insbesondere einer Oberfläche des Trägermaterials zugewandt sein und diese durchbrechen. In axialer Richtung der Aufnahme verlaufend erstreckt sich der größere Durchmesser zunächst in das Innere des Trägermaterials hinein. Im Inneren des Trägermaterials verspringt der Durchmesser auf den ersten Durchmesser, insbesondere an einer Stufenfläche, die vorzugsweise parallel zu einer Oberfläche des Trägermaterials verläuft. Nach dem Versprung setzt sich die Aufnahme in axialer Richtung mit einem ersten, kleineren Durchmesser fort. Der erste, kleinere Durchmesser kann das Trägermaterial auf der anderen Seite ebenfalls durchstoßen oder in Form eines Sackloches in dem Trägermaterial enden.

Die Aufnahme ist vorzugsweise eine stufige Durchgangsbohrung. Insbesondere ist die Aufnahme durch zwei koaxiale Öffnungen gebildet, die sich in axialer Richtung aneinander anschließen. Die Durchgangsbohrung kann vorzugsweise durch das Trägermaterial verlaufen oder als Sackloch gebildet sein.

Gemäß einem Ausführungsbeispiel wird vorgeschlagen, dass die axiale Erstreckung eines ersten Teilbereichs der Aufnahme im Bereich des ersten Durchmessers größer ist, als die axiale Erstreckung eines zweiten Teilbereichs der Aufnahme im Bereich des zweiten Durchmessers. Die Aufnahme ist somit vorzugsweise in axialer Richtung, d.h. im Verlauf durch das Trägermaterial hindurch in zwei Teilbereiche unterteilt. Zwischen den Teilbereichen verläuft eine Stufenfläche, die vorzugsweise parallel zu zumindest einer der Oberflächen ist, die durch die Aufnahme durchbrochen sind. Der erste Teilbereich hat einen größeren Durchmesser als der zweite Teilbereich. Der zweite Teilbereich kann als Sackloch oder als Durchgangsöffnung gestaltet sein. Durch die zwei Teilbereiche bildet sich zwischen den Teilbereichen eine Stufenfläche, die sich insbesondere für eine stoffschlüssige Verbindung zwischen dem Kontaktstück und dem Trägermaterial anbietet. In diesem Bereich ist die Gefahr geringer, dass Kontaktkorrosion durch Umwelteinflüsse gefördert wird.

Gemäß einem Ausführungsbeispiel wird vorgeschlagen, dass das Kontaktstück mit einem stabförmigen Bereich im ersten Teilbereich und mit einem Fügebereich im zweiten Teilbereich der Aufnahme angeordnet ist. Der stabförmige Bereich ist vorzugsweise zylinderförmig. Der stabförmige Bereich hat vorzugsweise einen zu dem ersten Teilbereich korrespondierenden Außenumfang. Insbesondere ist der Durchmesser des stabförmigen Bereichs als Presspassung, Übergangspassung oder Spielpassung zu dem Innendurchmesser des ersten Teilbereichs gebildet. Der Fügebereich weist vorzugsweise einen sich axial erstreckenden Kragen auf. Dieser Kragen kann beispielsweise in der Form eines Flansches gebildet sein. Das Kontaktstück kann mit dem stabförmigen Bereich in die Aufnahme eingeschoben werden, bis das Kontaktstück mit dem Fügebereich gegen die Stufenfläche zwischen dem ersten Teilbereich und dem zweiten Teilbereich anschlägt. Wie bereits erwähnt, kann sich der stabförmige Bereich axial erstrecken. Der Fügebereich erstreckt sich radial und kann in Form eines Kragens oder eine Flansches gebildet sein. Die beiden Bereiche des Kontaktstücks können an jeweils gegenüberliegenden axialen Enden des Kontaktstücks vorgesehen sein.

Gemäß einem Ausführungsbeispiel wird vorgeschlagen, dass das Kontaktstück in einem sich radial erstreckenden, stabförmigen Bereich mit seiner äußeren Mantelfläche an der Innenwand des ersten Durchmessers anliegt. Insbesondere beim Fügen des Kontaktstücks in die Aufnahme kann dies so geschehen, dass sich eine Berührfläche zwischen der äußeren Mantelfläche des stabförmigen Bereichs und der Innenwand des ersten Durchmessers bildet. Es kann jedoch der Fall sein, dass lediglich eine kraftschlüssige Verbindung zwischen dem Kontaktstück und der Innenwand des ersten Durchmessers gebildet ist. Insbesondere kann auf die Herstellung einer stoffschlüssigen Verbindung verzichtet werden, möglich ist eine solche Verbindung jedoch. Es ist jedoch auch möglich, dass der stabförmige Bereich in einer Übergangspassung in dem ersten Durchmesser angeordnet ist.

Erfindungsgemäß wird vorgeschlagen, dass das Kontaktstück mit einer Oberfläche eines sich radial erstreckenden Fügebereichs mit einer Stufenfläche zwischen den zwei Durchmessern der Aufnahme stoffschlüssig verbunden ist. Insbesondere ist die Oberfläche des Fügebereichs, welche in Richtung des stabförmigen Bereichs gerichtet ist, mit der Stufenfläche stoffschlüssig verbunden. Beim Fügen des Kontaktstücks in die Aufnahme kann dies beispielsweis mittels Reibschweißen oder Rotationsreibschweißen so in die Aufnahme gepresst werden, dass die Kontaktflächen des Fügebereichs und der Stufenfläche aneinander anliegen und miteinander verschweißt werden.

Gemäß einem Ausführungsbeispiel wird vorgeschlagen, dass das Kontaktstück im Bereich der Stufenfläche mit dem Trägermaterial stoffschlüssig verschweißt, insbesondere ultraschallgeschweißt oder reibgeschweißt ist. Diese Schweißverbindung tritt vorzugsweise lediglich zwischen der Stufenfläche und der der Stufenfläche zugewandten Oberfläche des Fügebereichs auf.

Für einen guten Stromtransport zwischen dem Terminal über das Kontaktstück zu dem Trägermaterial wird vorgeschlagen, dass die Kontaktfläche zwischen Fügebereich und Stufenfläche ein Mindestmaß nicht überschreitet. Die wirksame Fläche des Fügebereichs ist insbesondere abhängig von dem zweiten Durchmesser (d2) minus den ersten Durchmesser (d1). Insbesondere ist die Fläche gleich π/4^{∗}(d2-d1)². Die wirksame Fläche des Fügebereichs ist vorzugsweise eine ringförmige Fläche. Insbesondere ist die Fläche so groß wie die Stirnfläche des Kontaktstücks im Bereich des zweiten Durchmessers minus der Stirnfläche des Kontaktstücks im Bereich des ersten Durchmessers. Diese wirksame Fläche ist vorzugsweise relevant für den Stromfluss zwischen dem Kontaktstück und dem Trägermaterial, mithin zwischen den Terminals. Das Verhältnis zwischen der Fläche des Fügebereichs an der Stufenfläche zu der wirksamen Querschnittsfläche des Trägermaterials ist vorzugsweise größer als 0,5, insbesondere größer als 1. Vorzugsweise ist das Verhältnis kleiner als 2. Die wirksame Querschnittsfläche des Trägermaterials ist insbesondere durch die senkrecht zur Längsachse des Trägermaterials gebildete Querschnittsfläche des Trägermaterials gebildet. Insbesondere verläuft der Stromfluss zwischen den Terminals in Richtung der Längsachse des Trägermaterials. Die wirksame Querschnittsfläche ist vorzugsweise die kleinste Querschnittsfläche, die das Trägermaterial für den Stromfluss zwischen den Terminals bereithält. Dies ist in der Regel die Querschnittsfläche in einem Querschnitt senkrecht zur Längsachse des Trägermaterials. Insbesondere ist dies die Fläche senkrecht zu einer geraden Verbindung zwischen den beiden Terminals.

Gemäß einem Ausführungsbeispiel wird vorgeschlagen, dass das Kontaktstück einen Innendurchmesser von zumindest dem Außendurchmesser des ersten Terminals hat. Insbesondere kann das Kontaktstück rohrförmig, beispielsweise als Hülse gebildet sein. Diese Hülse hat vorzugsweise einen kleinsten Innendurchmesser, der es ermöglicht, dass das Terminal in die Hülse eingeschoben werden kann. Insbesondere ist eine Presspassung oder eine Übergangspassung zwischen dem Innendurchmesser des Kontaktstücks und dem Außendurchmesser des Terminals vorteilhaft. Das Terminal kann dann an der inneren Mantelfläche des Kontaktstücks mit seiner äußeren Mantelfläche verschweißt werden.

Gemäß einem Ausführungsbeispiel wird vorgeschlagen, dass in dem Trägermaterial ein zweiter als Aufnahme für das Terminal der zweiten Batteriezelle gebildeter Anschlussbereich angeordnet ist. Das Terminal der zweiten Batteriezelle kann beispielsweise in die Aufnahme eingeschoben werden und mit dem Material des Trägermaterials stoffschlüssig, beispielsweise mittels Reibschweißen verbunden werden.

Die beiden Anschlussbereiche können in dem Trägermaterial an distalen Enden angeordnet sein.

Ein weiterer Aspekt ist ein System mit einem zuvor beschriebenen Zellverbinder und einem Terminal einer ersten Batteriezelle sowie einem Terminal einer zweiten Batteriezelle. Das Terminal der ersten Batteriezelle ist stoffschlüssig mit dem Kontaktstück verbunden und das Terminal der zweiten Batteriezelle ist stoffschlüssig mit dem Trägermaterial im Bereich des zweiten Anschlussbereichs verbunden. Somit bildet das System eine Verbindung zwischen zwei Terminals von zwei Batteriezellen, welches sehr gute elektrochemische Eigenschaften hat, wenig zu Kontaktkorrosion neigt.

Gemäß einem Ausführungsbeispiel wird vorgeschlagen, dass das erste Terminal mit einer inneren Mantelfläche des Kontaktstücks im stabförmigen Bereich stoffschlüssig verbunden ist. Diese stoffschlüssige Verbindung kann mittels Ultrareibschweißen, Reibschweißen oder sonstiger Schweißverfahren gebildet sein.

Nachfolgend wird der Gegenstand anhand einer Ausführungsbeispiele zeigenden Zeichnung näher erläutert. In der Zeichnung zeigen:
- Fig. 1: schematisch die Verbindung von Batteriezellen mit Zellverbindern;
- Fig. 2: eine Draufsicht auf einen gegenständlichen Zellverbinder;
- Fig. 3: eine perspektivische Ansicht auf einen Teil eines Zellverbinders;
- Fig. 4a-c: Querschnitte durch Zellverbinder mit unterschiedlich geformten Aufnahmen;
- Fig. 5: eine Ansicht eines bolzenförmigen Kontaktstücks;
- Fig.6a: eine Ansicht eines hülsenförmigen Kontaktstücks;
- Fig. 6b: eine Schnittdarstellung eines hülsenförmigen Kontaktteils;
- Fig. 7: eine Aufnahme mit einem hülsenförmigen Kontaktteil;
- Fig. 8: eine Aufnahme mit einem bolzenförmigen Kontaktteil;
- Fig. 9: ein Anschlussbereich mit einem angeschlossenen Terminal;
- Fig. 10: ein Anschlussbereich mit einem angeschweißten Terminal.

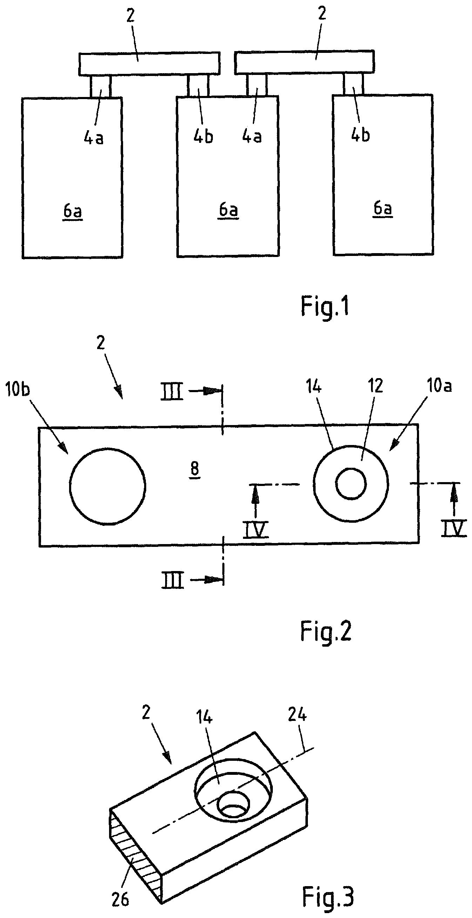

Fig. 1 zeigt zwei Zellverbinder 2. Die Zellverbinder 2 sind jeweils mit zwei Terminals 4a, 4b einer jeweiligen Batteriezelle 6 verbunden. Die Terminals 4a sind beispielsweise die Pluspole der Batteriezelle 6 und die Terminals 4b die Minuspole der Batteriezelle 6. Durch die Zellverbinder 2 wird somit eine Reihenschaltung zwischen den Batteriezellen 6 hergestellt.

In vielen Fällen, aufgrund der elektrochemischen Eigenschaften der Batteriezellen, sind die Terminals 4a, 4b aus unterschiedlichen metallischen Werkstoffen gebildet. Dies kann beispielsweise einerseits ein Kupferwerkstoff und andererseits ein Aluminiumwerkstoff sein. Ein Terminal 4a eines Pluspols einer Batteriezelle 6 kann im Falle einer Lithium-lonen-Batteriezelle 6 aus einem Aluminiumwerkstoff gebildet sein. Ein Terminal 4b eines Minuspols einer Lithium-lonen-Batteriezelle 6 kann beispielsweise aus einem Kupferwerkstoffe gebildet sein.

Um nun die Verbindung zwischen dem Zellverbinder 2 und den Terminals 4a, 4b dauerhaft gestalten zu können, ist eine stoffschlüssige Verbindung zwischen dem Material des Zellverbinders 2 und dem Material des Terminals 4a, 4b notwendig. Gleichzeitig muss diese stoffschlüssige Verbindung dauerhaft sein und Kontaktkorrosion muss möglichst unterdrückt sein. Dies wird durch eine sortenreine Verbindung gewährleistet.

Eine solche sortenreine Verbindung wird gegenständlich durch einen Zellverbinder 2 zur Verfügung gestellt, wie er in der Fig. 2 dargestellt ist. Der Zellverbinder 2 ist dabei beispielsweise aus einem Trägermaterial 8, insbesondere einem Kupferwerkstoff gebildet. In dem Trägermaterial 8 ist ein Anschlussbereich 10a aus einem Aluminiumwerkstoff und ein Anschlussbereich 10b aus einem Kupferwerkstoff gebildet.

Der Anschlussbereich 10b kann aus dem Trägermaterial 8 gebildet sein.

Der Anschlussbereich 10b kann vorzugsweise eine Bohrung, entweder eine Sacklockbohrung oder eine Durchgangsbohrung in dem Trägermaterial 8 sein.

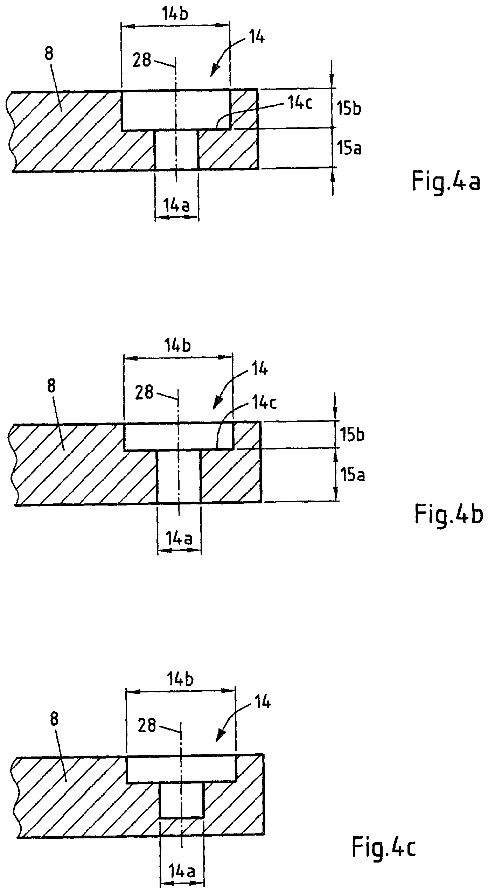

Der Anschlussbereich 10a ist als Aufnahme 14 für ein Kontaktteil 12 gebildet. Die Aufnahme 14 erstreckt sich durch das Trägermaterial 8 des Zellverbinders 2. Die Achse der Aufnahme 14 verläuft senkrecht zur Zeichenebene. Die Aufnahme 14 hat zwei verschiedene Durchmesser, so dass die Aufnahme 14 gestuft ist. Die Form der Aufnahme 14 wird nachfolgend im Zusammenhang mit den Figuren 4 näher erläutert werden.

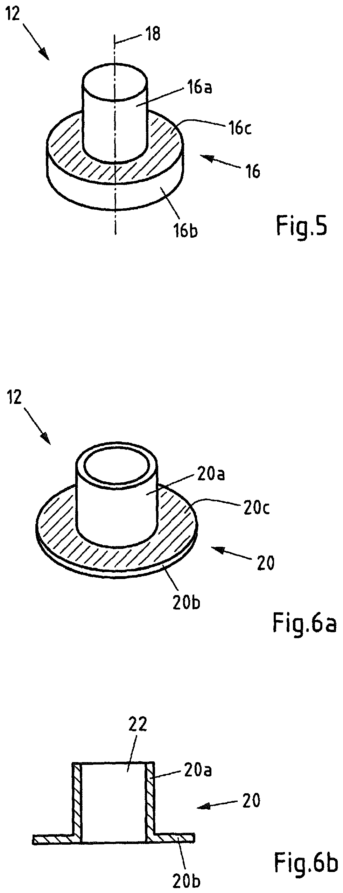

In der Aufnahme 14 ist ein Kontaktteil 12 angeordnet. Das Kontaktteil 12 kann, wie in der Fig. 5 gezeigt ist, ein Bolzen sein. Der in der Fig. 5 gezeigte Bolzen 16 ist in seiner Längsachse 18 mit zwei Bereichen von unterschiedlichem Durchmesser gebildet. Ein erster stabförmiger Bereich 16a ist an einem ersten distalen Ende gebildet und ein Fügebereich 16b ist an einem zweiten distalen Ende des Bolzens 16 angeformt. Der Fügebereich 16b hat eine ausgehend von der Längsachse 18 größere radiale Erstreckung als der stabförmige Bereich 16a. Hierdurch bildet sich eine Stufe entlang der Längsachse 18 in dem Bolzen 16, so dass eine in der Fig. 5 gestrichelt dargestellte Fügefläche 16 entsteht.

Das Kontaktteil 12 kann jedoch auch, wie in den Fig. 6a und b gezeigt, als Hülse 20 geformt sein. Die Hülse 20 kann einen rohrförmigen Abschnitt 20a sowie einen radial nach außen weisenden Kragen 20b aufweisen. Der Kragen 20b ist so geformt, dass sich auch an der Hülse 20 ein in der Fig. 6 gestrichelt dargestellter Fügebereich 20c bildet.

Fig. 6b zeigt die Hülse 20 gemäß Fig. 6a in einem Querschnitt. Zu erkennen ist, dass die Hülse 20 vorzugsweise sowohl im rohrförmigen Abschnitt 20a als auch im Bereich des Kragens 20b eine gleiche Wandstärke hat. Außerdem ist in der Fig. 6b zu erkennen, dass in der Hülse 20 eine Durchgangsöffnung 22 vorgesehen ist.

Fig. 3 zeigt einen Teilbereich eines Zellverbinders 2 in einer perspektivischen Ansicht in einem Schnitt III gemäß der Fig. 2. Zu erkennen ist, dass sich entlang des Schnitts III eine Querschnittsfläche bildet. Diese Querschnittsfläche ist die Querschnittsfläche, die sich bei einem Schnitt senkrecht zur Längsachse des Zellverbinders 2 ergibt. Insbesondere ist die Querschnittsfläche 26 die kleinste verfügbare Fläche, die sich im Querschnitt durch den Zellverbinder 2 zwischen den Anschlussbereichen 10a und 10b bildet. Diese kleinste Fläche ist maßgeblich für die Stromtragfähigkeit des Zellverbinders 2, insbesondere für den inneren Widerstand des Zellverbinders 2 aufgrund seiner Geometrie für Strom der zwischen den Anschlussbereichen 10a und 10b fließt.

Die Aufnahme 14 ist vorzugsweise so geformt, dass eine Stufenfläche, wie sie in der Fig. 4 dargestellt werden wird, mindestens die Fläche hat, wie die kleinste Querschnittsfläche 26.

Fig. 4a zeigt einen Längsschnitt durch die Aufnahme 14 entlang der Schnittlinie 4 gemäß der Fig. 2. Zu erkennen ist die Aufnahme 14 in dem Trägermaterial 8. Die Aufnahme 14 ist entlang ihrer Längsachse 28 gestuft, so dass sie zwei verschiedene Durchmesser 14a, 14b hat. Der erste Durchmesser 14a ist kleiner als der zweite Durchmesser 14b. Der erste Durchmesser 14a durchbricht eine erste Oberfläche des Trägermaterials 8 und der zweite Durchmesser 14b durchbricht vorzugsweise die der ersten Oberfläche gegenüberliegende zweite Oberfläche des Trägermaterials 8.

Die Durchmesser 14a, 14b sind koaxial zur Längsachse 28. Durch die zwei verschiedenen Durchmesser 14a, 14b bildet sich eine Stufenfläche 14c. Das Maß der Stufenfläche 14c, welche ringförmig ist, ergibt sich aus der Differenz des zweiten Durchmessers 14b minus dem ersten Durchmesser 14a.

Entlang der Längsachse 28 ist die Aufnahme 14 in einen ersten Teilbereich 15a und einen zweiten Teilbereich 15b unterteilt. Der erste Teilbereich 15a verläuft im Bereich des ersten Durchmessers 14a und der zweite Teilbereich 15b verläuft im Bereich des zweiten Durchmessers 14b.

In der Fig. 4a sind die Längserstreckungen der Teilbereiche 15a, 15b gleich groß.

In der Fig. 4b ist eine weitere Ausgestaltung einer Aufnahme 14 dargestellt. Im Unterschied zu der Fig. 4a ist der Teilbereich 15a größer als der Teilbereich 15b. Die Längserstreckung des Teilbereichs 15a ist größer als die Längserstreckung des Teilbereichs 15b.

In der Fig. 4c ist eine weitere Ausgestaltung einer Aufnahme 14 dargestellt. Zu erkennen ist, dass die Aufnahme 14 als Sacklochbohrung geformt ist. Der zweite Durchmesser 14b, welcher größer ist als der erste Durchmesser 14a durchbricht eine Oberfläche des Trägermaterials 18. In Längserstreckung entlang der Längsachse 28 verspringt der Durchmesser der Aufnahme 14 derart, dass sich der kleinere Durchmesser 14a in das Material des Trägermaterials 8 hineinerstreckt, jedoch die Oberfläche des Trägermaterials 8 nicht durchstößt.

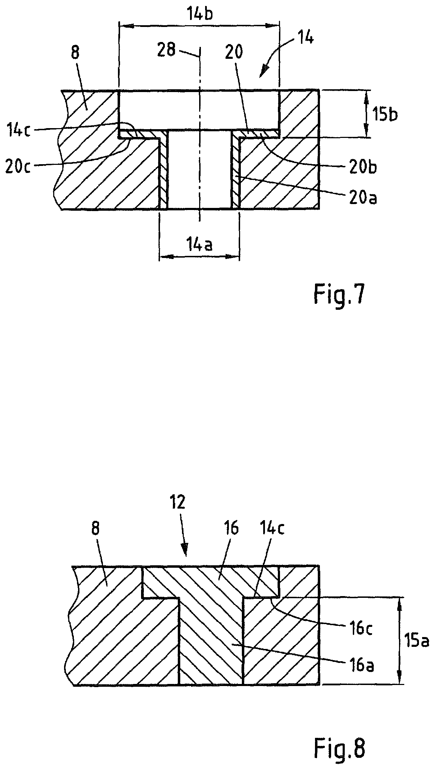

Zur Herstellung des Zellverbinders 2 wird das Kontaktteil 12 in die Aufnahme 14 eingeschoben und vorzugsweise darin verschweißt. Eine mögliche Ausgestaltung ist in der Fig. 7 dargestellt. Zu erkennen ist, dass die Hülse 20 entlang der Längsachse 28 in die Aufnahme 14 eingeschoben wurde.

Der äußere Durchmesser der Hülse 20 im Bereich des rohrförmigen Abschnitts 20a ist vorzugsweise als Übergangspassung oder Presspassung zu dem Durchmesser 14a gestaltet. Unter Kraftaufwendung kann der stabförmige Bereich 14a in den Teilbereich 15a eingeschoben werden. Anschließend kann beispielsweise mittels Ultraschallschweißen oder Reibschweißen, insbesondere Rotationsreibschweißen die Fügefläche 20c mit mit der Stufenfläche 14c verschweißt werden. Eine Angriffsfläche für Kontaktkorrosion durch Feuchtigkeit ergibt sich in diesem Ausführungsbeispiel ausschließlich an den Randspalten zwischen dem Kragen 20b und dem zweiten Durchmesser 14b sowie dem stabförmigen Bereich 20a und dem ersten Durchmesser 14a.

Es besteht auch die Möglichkeit, den zweiten Teilbereich 15b in seiner Längserstreckung so zu gestalten, dass er in seiner Längserstreckung der Wandstärke des Kragens 20b entspricht. Dann könnte die Hülse 20 planparallel mit der Oberfläche des Trägermaterials 8 im Bereich des Durchmessers 14b abschließen.

Vorzugsweise ist die Längserstreckung des Kontaktteils 20 gleich der Längserstreckung der Aufnahme 14.

Fig. 8 zeigt eine weitere Möglichkeit, in der Aufnahme 14 ein Kontaktteil 12 anzuordnen. Hierbei ist das Kontaktteil 12 der Bolzen 16, wie er in der Fig. 5 dargestellt ist. Auch hier wird insbesondere ausschließlich im Bereich der Fügefläche 16c bzw. der Stufenfläche 14c eine stoffschlüssige Verbindung zwischen dem Bolzen 16 und dem Trägermaterial 8 gebildet. Im Bereich des stabförmigen Bereichs 16a ist der Bolzen 16 vorzugsweise nur in kraftschlüssigem Kontakt mit der Innenfläche der Aufnahme 14 im ersten Teilbereich 15a.

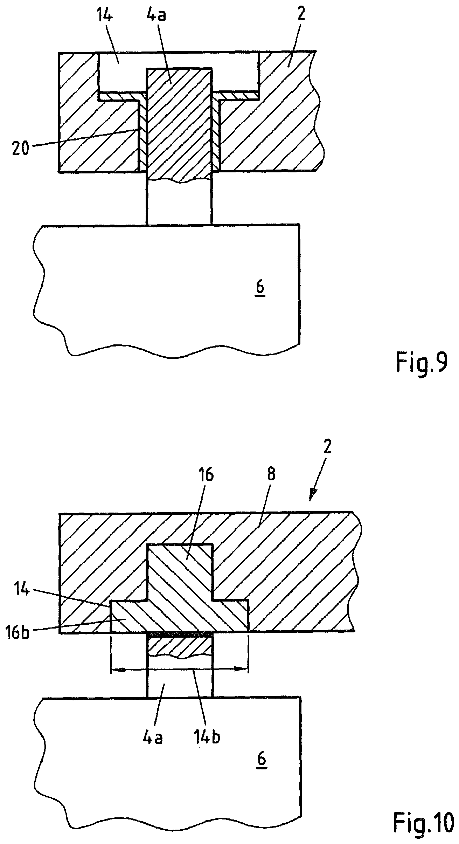

Nachdem das Kontaktteil 12 in der Aufnahme 14 befestigt wurde und dort vorzugsweise stoffschlüssig mit dem Trägermaterial 8, insbesondere durch Reibschweißen oder Ultrareibschweißen verbunden wurde, kann der Zellverbinder 2 mit den Terminals 4a 4b verbunden werden. Fig. 9 zeigt eine Detailansicht einer solchen Verbindung zwischen einem Zellverbinder 2 und einem aus Aluminium gebildeten Terminal 4a einer Batterie 6. Zu erkennen ist, dass das Terminal 4a durch die Hülse 20 in der Aufnahme 14 durchgeschoben wird. Anschließend kann das Terminal 4a mittels Ultrareibschweißen, Reibschweißen, Widerstandsschweißen oder dergleichen mit der inneren Mantelfläche der Hülse 20 verschweißt werden. Es bildet sich somit hier eine sortenreine Verbindung zwischen dem Terminal 2a und der Hülse 20, wenn die Hülse aus dem gleichen Material wie das Terminal 4a gebildet ist. Dies hat den Vorteil, dass Längenausdehnung und dergleichen von Terminal 4a als auch Hülse 20 identisch ist, so dass sich im Bereich der Verbindung zwischen der Hülse 20 und dem Terminal 4a keine temperaturbedingten Risse bilden können.

Fig. 10 zeigt eine weitere Möglichkeit einer Verbindung eines Zellverbinders 2 mit einem Terminal 4a einer Batterie 6. Hier ist beispielhaft in dem Zellverbinder 2 in der Aufnahme 14 ein Bolzen 16 angeordnet. Der Bolzen 16 schließt im Bereich des Durchmessers 14b planparallel mit der Oberfläche des Trägermaterials 8 ab. Im Bereich dieser Oberfläche ist der Bolzen 16 mit einer Stirnfläche im Fügebereich 16b stoffschlüssig mit einer Stirnfläche des Terminals 4a verschweißt.

Neben den gezeigten Ausführungsformen sind jegliche Kombinationen und Permutationen der beschriebenen Merkmale untereinander mit umfasst. Mit Hilfe des gegenständlichen Zellverbinders ist es möglich, Verbindungen zwischen Terminals von Batterien unterschiedlicher Werkstoffe in besonders einfacher und industriell beherrschbarer Weise miteinander zu fügen.

### Bezugszeichenliste

- 2: Zellverbinder
- 4a, b: Terminals
- 6: Batteriezelle
- 8: Trägermaterial
- 10a, b: Anschlussbereich
- 12: Kontaktteil
- 14: Aufnahme
- 14a, b: Durchmesser
- 14c: Stufenfläche
- 15a, b: Teilbereich
- 16: Bolzen
- 16a: stabförmiger Bereich
- 16b: Fügebereich
- 16c: Fügefläche
- 18: Längsachse
- 20: Hülse
- 20a: rohrförmiger Abschnitt
- 20b: Kragen
- 20c: Fügefläche
- 22: Durchgangsöffnung
- 24: Längsachse
- 26: Querschnittsfläche
- 28: Längsachse

## Patentansprüche

1. Zellverbinder (2), umfassend,
- ein Kontaktstück (12) aus einem ersten metallischen Werkstoff und
- ein Trägermaterial (8) aus einem zweiten metallischen Werkstoff, wobei
- in dem Trägermaterial zumindest ein erster als Aufnahme (14) für das Kontaktstück gebildeter Anschlussbereich (10a) angeordnet ist,
- das Trägermaterial monolithisch gebildet ist,
- die Aufnahme gestuft ist, derart, dass die Aufnahme zwei verschiedene Durchmesser (14a, b) aufweist, die jeweils einer von zwei einander gegenüberliegenden Oberflächen des Trägermaterials zugewandt sind,
- das Kontaktstück in der Aufnahme angeordnet und zu der Aufnahme korrespondierend gestuft ist, und
- das Kontaktstück mit zumindest einer Innenwand der Aufnahme stoffschlüssig verbunden ist,
- **dadurch gekennzeichnet, dass**
- das Kontaktstück mit einer Oberfläche eines sich radial erstreckenden Fügebereichs mit einer Stufenfläche (14c) zwischen den zwei Durchmessern der Aufnahme stoffschlüssig verbunden ist.

2. Zellverbinder nach Anspruch 1,
**dadurch gekennzeichnet, dass** das Kontaktstück als gestufte Hülse (20) oder als gestufter Bolzen (16) mit jeweils im Verlauf der Längsrichtung gestufter Mantelfläche gebildet ist und/oder dass das Kontaktstück metallisch, insbesondere aus einem Aluminiumwerkstoff gebildet ist.

3. Zellverbinder nach Anspruch 1 oder 2,
**dadurch gekennzeichnet, dass**
das Trägermaterial aus einem metallischen Vollmaterial, insbesondere aus einem Kupferwerkstoff gebildet ist.

4. Zellverbinder nach einem der vorangehenden Ansprüche,
**dadurch gekennzeichnet, dass**
die Aufnahme einen ersten Durchmesser und einen zweiten, größeren Durchmesser als den ersten Durchmesser aufweist und/oder dass die Aufnahme eine stufige Durchgangsbohrung durch das Trägermaterial ist.

5. Zellverbinder nach einem der vorangehenden Ansprüche,
**dadurch gekennzeichnet, dass**
die axiale Erstreckung eines ersten Teilbereichs der Aufnahme im Bereich des ersten Durchmessers größer ist, als die axiale Erstreckung eines zweiten Teilbereichs der Aufnahme im Bereich des zweiten Durchmessers.

6. Zellverbinder nach einem der vorangehenden Ansprüche,
**dadurch gekennzeichnet, dass** das Kontaktstück mit einem stabförmigen Bereich (16a) im ersten Teilbereich und mit einem Fügebereich (16b) im zweiten Teilbereich der Aufnahme angeordnet ist und/oder dass das Kontaktstück einen sich axial erstreckenden stabförmigen Bereich und einen sich radial erstreckenden Fügebereich aufweist und/oder dass das Kontaktstück an seinem ersten axialen Ende aus dem Fügebereich und seinem zweiten axialen Ende aus dem stabförmigen Bereich gebildet ist.

7. Zellverbinder nach einem der vorangehenden Ansprüche,
**dadurch gekennzeichnet, dass**
das Kontaktstück in einem sich axial erstreckenden stabförmigen Bereich mit seiner äußeren Mantelfläche an der Innenwand des ersten Durchmessers anliegt und/oder das Kontaktstück im Bereich der Stufenfläche mit dem Trägermaterial stoffschlüssig verschweißt, insbesondere ultraschallgeschweißt oder reibgeschweißt ist.

8. Zellverbinder nach einem der vorangehenden Ansprüche,
**dadurch gekennzeichnet, dass** das Verhältnis zwischen einer für einen Stromfluss zwischen den Terminals zweier mittels des Zellverbinders elektrisch miteinander zu verbindenden Batteriezellen (6) wirksamen Querschnittsfläche des Trägermaterials und der der Stufenfläche zugewandten Fläche des Fügebereichs zwischen 0,5 und 2, vorzugsweise zwischen 0,9 und 2, vorzugsweise größer 1 ist.

9. Zellverbinder nach einem der vorangehenden Ansprüche,
**dadurch gekennzeichnet, dass**
dass das Kontaktstück einen inneren Durchmesser von zumindest dem Außendurchmesser eines ersten Terminals einer mit dem Zellverbinder elektrisch verbindbaren Batteriezelle hat.

10. Zellverbinder nach einem der vorangehenden Ansprüche,
**dadurch gekennzeichnet, dass** in dem Trägermaterial ein zweiter als Aufnahme für das Terminal einer zweiten Batteriezelle gebildeter Anschlussbereich angeordnet ist und/oder dass die zwei Anschlussbereiche an distalen Enden des Trägermaterials angeordnet sind.

11. System mit einem Zellverbinder nach einem der vorangehenden Ansprüche, und einem ersten Terminal einer ersten Batteriezelle sowie einem zweiten Terminal einer zweiten Batteriezelle, wobei das erste Terminal stoffschlüssig mit dem Kontaktstück verbunden ist und das zweite Terminal stoffschlüssig mit dem Trägermaterial im Bereich des zweiten Anschlussbereichs verbunden ist.

12. System nach Anspruch 11,
**dadurch gekennzeichnet, dass**
das erste Terminal mit einer inneren Mantelfläche des Kontaktstücks im stabförmigen Bereich stoffschlüssig verbunden ist.

## Claims

1. Cell connector (2) comprising,
- a contact piece (12) made of a first metallic material, and
- a carrier material (8) made of a second metallic material, wherein
- at least one first connection region (10a) formed as a receptacle (14) for the contact piece is arranged in the carrier material,
- the carrier material is monolithic,
- the receptacle is stepped such that the receptacle has two different diameters (14a, b) each facing one of two opposing surfaces of the substrate material,
- the contact piece is arranged in the receptacle and is stepped correspondingly to the receptacle, and
- the contact piece is materially connected to at least one inner wall of the receptacle,
- **characterised in that**
- the contact piece is materially connected to a surface of a radially extending joining region with a stepped surface (14c) between the two diameters of the receptacle.

2. Cell connector according to claim 1,
**characterised in that**
the contact piece is formed as a stepped sleeve (20) or as a stepped bolt (16) with a circumferential surface which is stepped in the course of the longitudinal direction respectively and/or **in that** the contact piece is formed metallically, in particular from an aluminium material.

3. Cell connector according to claim 1 or 2,
**characterised in that**
the carrier material is formed from a metallic solid material, in particular from a copper material.

4. Cell connector according to one of the preceding claims,
**characterised in that**
the receptacle has a first diameter and a second, larger diameter than the first diameter and/or that the receptacle is a stepped through bore through the carrier material.

5. Cell connector according to one of the preceding claims,
**characterised in that**
the axial extension of a first portion of the receptacle in the region of the first diameter is greater than the axial extension of a second portion of the receptacle in the region of the second diameter.

6. Cell connector according to one of the preceding claims,
**characterised in that**
the contact piece is arranged with a rod-shaped region in the first partial region and with a joining region in the second partial region of the receptacle and/or **in that** the contact piece has an axially extending rod-shaped region (16a) and a radially extending joining region (16b) and/or **in that** the contact piece is formed at its first axial end from the joining region and at its second axial end from the rod-shaped region.

7. Cell connector according to one of the preceding claims,
**characterised in that**
the contact piece in an axially extending rod-shaped region bears with its outer circumferential surface against the inner wall of the first diameter and/or the contact piece in the region of the stepped surface is materially welded to the carrier material, in particular ultrasonically welded or friction-welded.

8. Cell connector according to one of the preceding claims,
**characterised in that**
the ratio between a cross-sectional area of the carrier material which is effective for a current flow between the terminals of two battery cells (6) which are to be electrically connected to one another by means of the cell connector and the area of the joining region facing the step area is between 0.5 and 2, preferably between 0.9 and 2, preferably greater than 1.

9. Cell connector according to one of the preceding claims,
**characterised in that**
the contact piece has an inner diameter of at least the outer diameter of a first terminal of a battery cell which can be electrically connected to the cell connector.

10. Cell connector according to one of the preceding claims,
**characterised in that**
a second connection region formed as a receptacle for the terminal of a second battery cell is arranged in the carrier material and/or **in that** the two connection regions are arranged at distal ends of the carrier material.

11. System with a cell connector according to one of the preceding requirements, and a first terminal of a first battery cell and a second terminal of a second battery cell, wherein the first terminal is materially connected to the contact piece and the second terminal is materially connected to the carrier material in the region of the second terminal area.

12. System according to claim 11,
**characterised in that**
the first terminal is materially connected to an inner surface of the contact piece in the rod-shaped area.

## Revendications

1. Connecteur d'éléments de batterie (2) comprenant :
- une pièce de contact (12) se composant d'un premier matériau métallique, et
- un matériau support (8) se composant d'un second matériau métallique,
- où au moins une première zone de raccordement (10a) formée pour servir de logement (14) pour la pièce de contact est disposée dans le matériau support,
- le matériau support est formé de manière monolithique,
- le logement est étagé, de manière telle que le logement présente deux diamètres différents (14a, b) qui sont tournés, respectivement, vers une des deux surfaces du matériau support, qui se font face l'une l'autre,
- la pièce de contact est disposée dans le logement et étagée de manière correspondant au logement, et
- la pièce de contact est assemblée, par continuité de matériau, avec au moins une paroi intérieure du logement,
**caractérisé**
**en ce que** la pièce de contact, par une surface d'une zone de jointure s'étendant radialement, est assemblée, par continuité de matériau, avec une surface étagée (14c) située entre les deux diamètres du logement.

2. Connecteur d'éléments de batterie selon la revendication 1,
**caractérisé**
**en ce que** la pièce de contact est formée comme une douille étagée (20) ou bien comme un boulon étagé (16) ayant respectivement une surface latérale étagée se profilant dans le sens de la longueur et/ou **en ce que** la pièce de contact est métallique, formée
en particulier en se composant d'un matériau à base d'aluminium.

3. Connecteur d'éléments de batterie selon la revendication 1 ou 2,
**caractérisé**
**en ce que** le matériau support est formé à partir d'un matériau plein métallique, en particulier en se composant d'un matériau à base de cuivre.

4. Connecteur d'éléments de batterie selon l'une quelconque des revendications précédentes,
**caractérisé**
**en ce que** le logement présente un premier diamètre et un second diamètre plus grand que le premier diamètre et/ou **en ce que** le logement est un perçage de passage étagé, réalisé à travers le matériau support.

5. Connecteur d'éléments de batterie selon l'une quelconque des revendications précédentes,
**caractérisé**
**en ce que** l'étendue axiale d'une première zone partielle du logement, située dans la zone du premier diamètre, est plus grande que l'étendue axiale d'une seconde zone partielle du logement, située dans la zone du second diamètre.

6. Connecteur d'éléments de batterie selon l'une quelconque des revendications précédentes,
**caractérisé**
**en ce que** la pièce de contact est disposée en ayant une zone (16a) en forme de tige située dans la première zone partielle et en ayant une zone de jointure (16b) située dans la seconde zone partielle du logement et/ou **en ce que** la pièce de contact présente une zone en forme de tige s'étendant axialement et une zone de jointure s'étendant radialement et/ou **en ce que** la pièce de contact est formée, au niveau de sa première extrémité axiale, en
se composant de la zone de jointure et, au niveau de sa seconde extrémité axiale, formée en se composant de la zone en forme de tige.

7. Connecteur d'éléments de batterie selon l'une quelconque des revendications précédentes,
**caractérisé**
**en ce que** la pièce de contact, dans une zone en forme de tige s'étendant axialement, vient en appui, par sa surface latérale extérieure, sur la paroi intérieure du premier diamètre, et/ ou **en ce que** la pièce de contact, dans la zone de la surface étagée, est soudée, par continuité de matériau, avec le matériau support, en particulier soudée par ultrasons ou bien soudée par friction.

8. Connecteur d'éléments de batterie selon l'une quelconque des revendications précédentes,
**caractérisé**
**en ce que** le rapport calculé entre une surface de section active du matériau support, pour un flux de courant circulant entre les bornes de deux éléments de batterie (6) à connecter électriquement l'un à l'autre au moyen du connecteur d'éléments de batterie, et la surface de la zone de jointure, surface qui est tournée vers la surface étagée, est compris entre 0,5 et 2, de préférence compris entre 0,9 et 2, de préférence supérieur à 1.

9. Connecteur d'éléments de batterie selon l'une quelconque des revendications précédentes,
**caractérisé**
**en ce que** la pièce de contact a un diamètre intérieur au moins égal au diamètre extérieur d'une première borne d'un élément de batterie pouvant être connecté électriquement au connecteur d'éléments de batterie.

10. Connecteur d'éléments de batterie selon l'une quelconque des revendications précédentes,
**caractérisé**
**en ce qu'**une seconde zone de raccordement, formée comme un logement pour la borne d'un second élément de batterie, est disposée dans le matériau support, et/ou **en ce que** les deux zones de raccordement sont disposées au niveau d'extrémités distales du matériau support.

11. Système comprenant un connecteur d'éléments de batterie selon l'une quelconque des revendications précédentes, et comprenant une première borne d'un premier élément de batterie, ainsi qu'une seconde borne d'un second élément de batterie, où la première borne est assemblée, par continuité de matériau, avec la pièce de contact, et la seconde borne est assemblée, par continuité de matériau, avec le matériau support dans la partie formant la seconde zone de raccordement.

12. Système selon la revendication 11,
**caractérisé**
**en ce que** la première borne est assemblée, par continuité de matériau, avec une surface latérale intérieure de la pièce de contact, dans la zone en forme de tige.
